# EUROPEAN PATENT APPLICATION

(11) **EP 4 167 439 A1**
(43) Date of publication of application: **19.04.2023**
(21) Application number: 21202082.0
(22) Date of filing: 12.10.2021
(51) Int. Cl.: H02K 1/2791, H02K 15/03

(54) **ASSEMBLY METHOD AND DEVICE FOR A ROTOR OF AN ELECTRIC MOTOR**

(71) Applicant: BSH Hausgeräte GmbH, 81739 München (DE)
(72) Inventor: Blaz, Robert, 06601 Humenne (SK)

(57) **Abstract**

Disclosed are a method for positioning magnets on a rotor of an electric motor, wherein adjacent magnets are positioned in a gap-free circle, and then moved simultaneously radially until a uniform reference gap is met between them, a device having a plurality of ring segments capable of forming an adjustable annular ring which are simultaneously moveable in radial direction and capable of moving the magnets from a gap-free circle radially until a uniform reference gap is met between them, and a kitchen appliance.

## Description

The invention refers to a method for positioning magnets on a rotor of an electric motor, a device for positioning magnets on a rotor of an electric motor and a kitchen appliance.

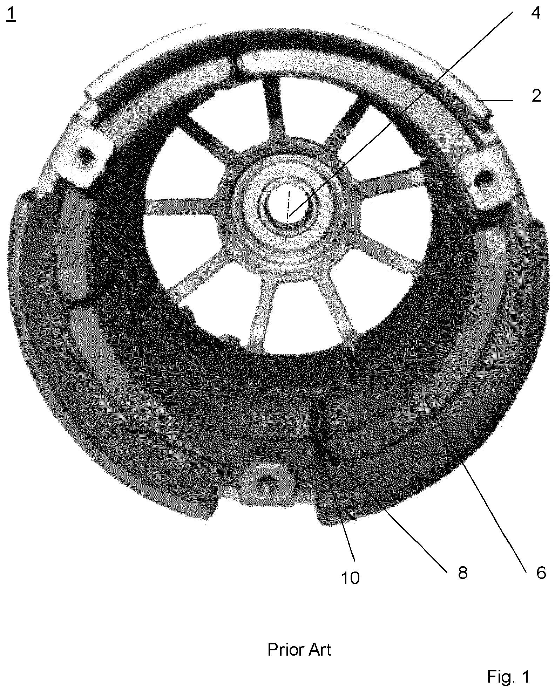

In figure 1, a known rotor 1 of an electric motor is shown. The motor is designed as an external rotor motor. The rotor 1 has a cage 2 rotating on a rotation axis 4 around an inner stator (not shown) and carries a plurality of permanent magnets 6 on its inner circumferential surface. The inner stator is equipped with electric coils and non-rotatable. In circumferential gaps 10 between the magnets 6 spring sheets 8 are positioned in order to keep the magnets in a distance from each other.

It has been shown that during assembly the position of each magnet can vary slightly. In particular, the circumferential gaps between adjacent magnets can vary which results in cogging torque, noise and vibration generation.

It is an object of the invention to provide a method for positioning magnets on a rotor enabling a precise positioning of the magnets on the rotor, a device for facilitating a precise positioning of magnets on a rotor and a kitchen appliance which electric motor shows a smooth running behaviour.

This object is solved by a method according to the features of claim 1, by a device according to the features of claim 4 and by a kitchen appliance with the features of claim 8. Advantageous embodiments are disclosed in the dependent claims, the description and the figures.

A method according to the invention for positioning magnets on a rotor of an electric motor, comprises the steps:
- Positioning adjacent magnets in a gap-free circle, and
- Moving the magnets simultaneously radially until a uniform reference gap is met between them.

As the magnets are starting at the same point ― the gap-fee circle - and moved simultaneously in radial direction, a precise circumferential and uniform gap can be adjusted between them, independent on their width (circumferential extension of the magnets). Due to the regular distance in circumferential direction between the magnets cogging torque is avoided which would cause noise and vibration generations. The magnets can be aligned to each other in the rotor without any distance elements. The method can be applied to both types external rotor motor and internal rotor motor. If the method is applied to assembly an external rotor motor, the magnets are positioned gap free in a radial inner circle and moved radially outwards. If the method is applied to assembly an internal rotor motor, the magnets are positioned gap free in a radial outer circle and moved radially inwards.

The method can be facilitated when the magnets are pre-positioned in a circle having circumferential gaps between them and moved radially to form the gap-free circle. If the method is applied to assembly an external rotor motor, the magnets are pre-positioned in a radial outer circle and moved radially inwards. If the method is applied to assembly an internal rotor motor, the magnets are pre-positioned in a radial inner circle and moved radially outwards.

The uniform reference gap is achieved, when the magnets are touching a circumferential surface of a rotor cage. By means of this, the surface forms a stop such that the width of the reference gaps is met reliable. If the method is applied to assembly an external rotor motor, the surface is an inner circumferential surface of the rotor. If the method is applied to assembly an internal rotor motor, the surface is an outer circumferential surface of the rotor.

A device according to the invention has a plurality of ring segments capable of forming an adjustable annular ring which are simultaneously moveable in radial direction and capable of moving the magnets from a gap-free circle radially until a uniform reference gap is met between them. Such a device comprises only a few elements, which facilitates the positioning of the magnets and its reliability.

In order to enable the magnets to be shifted in a circumferential direction during their radial movements, the ring segments enables a circumferential movement of each magnet.

The ring segments can be moved radially to achieve the gap-fee circle. Therefore, means are provided to apply a closing force to the segments which is directed radially in the direction of the gap-free circle. If the method is applied to assembly an external rotor motor, the closing force is directed radially inwards. If the method is applied to assembly an internal rotor motor, the closing force is directed radially outwards.

As well, in order to move the magnets in a counter direction, means are provided to apply an opening force radially directed away from the gap-free circle. If the method is applied to assembly an external rotor motor, the opening force is directed radially outwards. If the method is applied to assembly an internal rotor motor, the opening force is directed radially inwards.

A kitchen appliance according to the invention has an electric motor, which rotor is assembled according to the inventive method. A preferred example is a cook hood as a household appliance. Such kitchen appliance has a smooth running behaviour, resulting in a silent operation. Further exemplary appliances are blower NBS EC/EC motor with segment magnets.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure. Shown is schematically in
- Fig. 1:: a perspective view of a rotor of an electric motor state of the art,
- Fig. 2:: a perspective view of a rotor according to the invention, and
- Fig. 3:: assembly steps of the rotor according to the invention.

In the following, any direction term such as circumferential refers to the rotation axis 16 of the rotor 12.

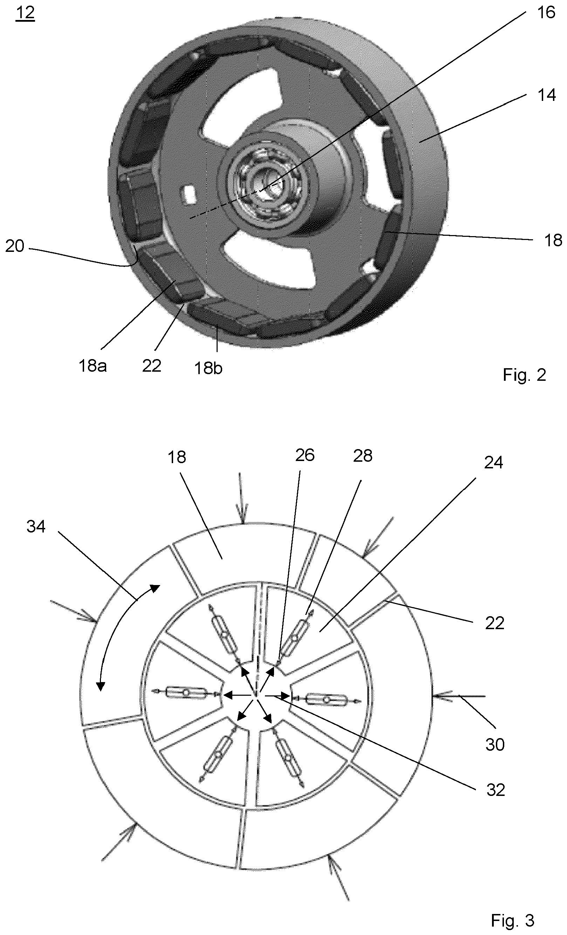

In figure 2, a preferred embodiment of a rotor 12 of an electric motor is shown. The motor is designed as an external rotor motor. The rotor 12 has a cage 14 rotating on a rotation axis 16 around an inner stator (not shown) and carries a plurality of segmented magnets 18, in particular arc-shaped permanent magnets, on its inner circumferential surface 20. The not shown inner stator is equipped with electric coils and non-rotatable. The magnets 18 are held in place on the circumferential surface 20 by glue, for instance. Between two adjacent magnets 18a, 18b, a circumferential gap 22 is shown. The gaps 22 extents in axial direction and have a uniform extension in circumferential direction (width).

As illustrated in figure 3, the magnets 18 are positioned on the rotor 12 having the uniform reference gap 22 between them as followed:
In a first step, the magnets 18 are positioned in a radial outer circle (not shown) having random gaps between them.
In a second step, the magnets 18 are moved radially inwards until they are positioned in a gap-free circle (not shown).
In a third step, the magnets 18 are moved simultaneously radially outwards until the uniform reference gap 22 is met between them. In this state, when the uniform reference gap 22 is achieved between all adjacent magnets 18, the magnets 18 are touching a circumferential surface 20 of the rotor cage 14 with their rear surface which facilitates the fixation of the magnets 18 to the inner circumferential surface 20 (see fourth step).
In a fourth step, the magnets 18 are fixed to the inner circumferential surface 20 of the rotor 12.

In order to move the magnets adequately, a plurality of triangle-shaped ring segments 24 are provided. As shown, the ring segments 24 form an annular ring that can be maximised or minimised by, preferrable simultaneous, radial movement of them. The magnets 18 can be fixed to the segments 24 or the magnets are positioned radially outside of the segments 24 being in surface contact with them. The segments 24 are movable in both radial directions 26, 28 by applying a radial closing force 30 to the magnets or by applying a radial opening force 32 to the segments 24 in counter direction. In addition, the magnets 18 are movable in circumferential direction 34 when being in circumferential surface contact with the segments 24 or when fixed on the segments 24.

In a fifth step, the segments 24 and an inventive device providing the segments 24, respectively, are removed after the attachment of the magnets 18 to the rotor 12.

The closing force 30 and the opening force 32 are applied via respective means, which are also part of the device according to the invention and not shown.

In figure 3, the width of the magnet 18 varies. Showing the magnets 18 with different width is only used in order to illustrate that the method according to the invention is applicable independent of their extensions in circumferential direction. For the sake of a smooth running, magnets having the same width are preferred.

Although the method is explained with reference to an external rotor motor, the method of the invention can also be applied to an internal rotor motor by changing the radial movements in counter directions and by positioning the magnets 18 within the ring build by the segments 24. If the rotor 12 is part of an internal rotor motor, an additional fixture can be provided to keep the magnets 18 in position before fixing them to an outer circumferential rotor surface.

Disclosed are a method for positioning magnets 18 on a rotor of an electric motor, wherein adjacent magnets 18 are positioned in a gap-free circle, and then moved simultaneously radially until a uniform reference gap 22 is met between them, a device having a plurality of ring segments 24 capable of forming an adjustable annular ring which are simultaneously moveable in radial direction and capable of moving the magnets 18 from a gap-free circle radially until a uniform reference gap 22 is met between them, and a kitchen appliance.

### Reference list

- 1: rotor
- 2: cage
- 4: rotation axis
- 6: magnet
- 8: spring sheet
- 10: circumferential gap

- 12: rotor
- 14: cage
- 16: rotation axis
- 18, 18a, 18b: magnet
- 20: inner circumferential surface
- 22: gap
- 24: ring segment
- 26: radial direction of the segments
- 28: radial direction of the segments
- 30: closing force
- 32: opening force
- 34: circumferential direction

## Claims

1. Method for positioning magnets on a rotor (12) of an electric motor, comprising the steps:
- Positioning adjacent magnets (18) in a gap-free circle, and
- Moving the magnets (18) simultaneously radially until a uniform reference gap (22) is met between them.

2. Method according to claim 1, wherein the magnets (18) are pre-positioned in a circle having circumferential gaps and moved radially to form the gap-free circle.

3. Method according to claim 1 or 2, wherein, when the uniform reference gap (22) is achieved, the magnets are touching a circumferential surface (20) of a rotor cage (14).

4. Device for positioning magnets (18) on a rotor (12) of an electric motor, having a plurality of ring segments (24) capable of forming an adjustable annular ring which are simultaneously moveable in radial direction and capable of moving the magnets (18) from a gap-free circle radially until a uniform reference gap (22) is met between them.

5. Device according to claim 4, wherein the ring segments (24) enables a circumferential movement of each magnet (18).

6. Device according to claims 4 or 5, wherein means are provided for applying a closing force (30) to the ring segments (24) which is directed radially in the direction of the gap-fee circle.

7. Device according to claims 4, 5 or 6, wherein means are provided for applying an opening force (32) to the magnets (18) which is directed radially away from the gap-free circle.

8. Kitchen appliance having an electric motor, for instance a cook hood, having a rotor (12) assembled according to the method of any of the claims 1 to 3.
